# EUROPÄISCHE PATENTSCHRIFT

(11) **EP 0 811 149 B1**
(45) Veröffentlichungstag und Bekanntmachung des Hinweises auf die Patenterteilung: **11.09.2002**
(21) Anmeldenummer: 95942663.6
(22) Anmeldetag: 13.12.1995
(51) Int. Cl.: G01H 1/00, G10K 11/00, F16B 11/00

(54) **Metallischer Körper zum Ankleben von aussen an das Gehäuse einer Maschine und Klebeverfahren**
Metallic body to be glued externally to a machine housing and glueing method
Corps métallique a coller sur l'extérieur du bâti d'une machine et procés de collage

(43) Veröffentlichungstag der Anmeldung: 10.12.1997
(73) Patentinhaber: Prüftechnik Dieter Busch AG, 85737 Ismaning (DE)
(72) Erfinder: LIENESCH, Hans-Jürgen, D-85748 Garching (DE)
(74) Vertreter: Schorer, Reinhard
(86) Internationale Anmeldenummer: EP9504939
(87) Internationale Veröffentlichungsnummer: WO96036855

(56) Entgegenhaltungen:
- EP-A- 0 321 600
- EP-A- 0 368 728
- WO-A-97/02720
- GB-A- 589 260
- US-A- 4 823 602
- PATENT ABSTRACTS OF JAPAN vol. 014, no. 136 (P-1021), 14.März 1990 & JP,A,02 002905 (NAOYUKI OMATOI), 8.Januar 1990,

## Beschreibung

Die Erfindung bezieht sich auf einen an das Gehäuse einer Maschine, insbesondere einer vibrierenden Maschine, außen anzuklebenden metallischen Körper, insbesondere das Gehäuse eines Sensors zum Umwandeln einer physikalischen Größe, insbesondere Vibration, in ein entsprechendes elektrisches Signal oder einen Adapter zum Anbringen eines solchen Sensors an dem Gehäuse der Maschine, wobei der Körper eine im wesentlichen ebene Klebefläche aufweist, und auf eine Klebverbindung zwischen der Klebefläche eines solchen Körpers und einer entsprechenden Klebegegenfläche außen an einem Maschinengehäuse.

Sensoren zum Umwandeln einer physikalischen Größe in ein entsprechendes elektrisches Signal, z.B. Beschleunigungsaufnehmer zum Umwandeln einer Vibration in ein entsprechendes elektrisches Signal, müssen häufig dauerhaft und zuverlässig sowie in einer zur unverfälschten und im wesentlichen ungedämpften Übertragung der umzuwandelnden physikalischen Größe geeigneten Weise an dem Gehäuse einer Maschine befestigt werden, und zwar entweder direkt oder, wenn der Sensor leicht abnehmbar sein soll, mittels eines an dem Maschinengehäuse in entsprechender Weise zu befestigenden Adapters.

Eine bekannte Art der Befestigung sieht vor, den Sensor oder Adapter an dem Gehäuse der Maschine anzuschrauben, wofür dieses mit einer Gewindebohrung von relativ großem Durchmesser versehen wird, in das ein massiver Gewindestutzen am Sensorgehäuse bzw. Adapter eingeschraubt wird. Diese bekannte Art der Befestigung erfordert einen erheblichen Arbeitsaufwand und ist zeitraubend, insbesondere wenn die Gewindebohrung erst am Aufstellungsort der Maschine eingerichtet wird, was meistens der Fall ist.

Hinzu kommt, daß die vorgenannte bekannte Art der Befestigung eines Sensors oder Adapters an einem Maschinengehäuse dann nicht anwendbar ist, wenn das Maschinengehäuse nicht angebohrt werden darf.

Zur Vermeidung der vorgenannten Schwierigkeiten ist bereits vorgeschlagen worden, den Sensor oder Adapter an dem Maschinengehäuse anzukleben.

Insbesondere bei vibrierenden Maschinen ist das Problem noch nicht zufriedenstellend gelöst, eine langlebige Klebverbindung zwischen dem Sensor bzw. Adapter und dem Maschinengehäuse zu erhalten, die eine so große Festikeit aufweist, daß ein zuverlässiger Halt gewährleistet ist wie z.B. in EP-A-0 321 600.

Der Erfindung liegt daher die Aufgabe zugrunde, zum einen den anzuklebenden Körper, und zum anderen die Klebverbindung so zu gestalten, daß eine dauerhafte Anbringung des Sensors allein durch Ankleben, also ohne die Notwendigkeit des Einbringens einer großdimensionierten Gewindebohrung in das Maschinengehäuse, erzielt wird.

Die vorgenannte Aufgabe wird einerseits durch die konstruktiven Maßnahmen an dem anzuklebenden metallischen Körper gemäß Patentanspruch 1 und andererseits durch die besondere Gestaltung der Klebverbindung zwischen diesem Körper und dem Maschinengehäuse gemäß Anspruch 9 erreicht.

Die Merkmale des Patentanspruchs 1 gewährleisten, daß ein in genügender Menge zwischen dem metallischen Körper und dem Maschinengehäuse aufgetragener Klebstoff bei drehender Annäherung des metallischen Körpers an das Maschinengehäuse nicht nur über die Klebefläche zuverlässig verteilt, sondern darüber hinaus krallenartig in die sich unmittelbar an die Klebefläche anschließende Hinterschneidung, also auf den Rücken der Keilform, hineingezogen wird, wodurch eine besonders feste Verbindung zwischen dem am Maschinengehäuse haftenden Klebstoff und dem metallischen Körper erreicht wird, sobald der Klebstoff hart geworden ist. Diese Art der Verbindung setzt voraus, daß der Klebstoffauftrag in einer größeren, als nur zum Bedecken der Klebeflächen ausreichenden Menge beim Herstellen der Klebverbindung zwischen dem gemäß Anspruch 1 gestalteten Körper und dem Maschinengehäuse aufgetragen wird und die' Annäherung des metallischen Körpers an das Maschinengehäuse in einer drehenden Bewegung um eine zur Klebefläche senkrechte Achse, vorzugsweise etwa die Längsmittelachse des metallischen Körpers, erfolgt, wie dies gemäß Patentanspruch 9 vorgesehen ist.

Die abhängigen Ansprüche 2 bis 8 betreffen bevorzugte Ausgestaltungen des metallischen Körpers gemäß Patentanspruch 1 und die abhängigen Ansprüche 10 bis 13 haben bevorzugte Ausgestaltungen der Klebverbindung zwischen dem metallischen Körper und dem Maschinengehäuse zum Gegenstand.

Die Erfindung ist nicht nur im Zusammenhang mit dem Ankleben von Sensoren oder Adaptern für Sensoren an Maschinengehäusen von Vorteil, sondern überhaupt für die klebende Befestigung irgendwelcher metallischer Körper an Maschinen, insbesondere vibrierenden Maschinen, wo es auf eine dauerhafte Verbindung hoher Festigkeit ankommt.

Die Erfindung wird nachstehend anhand der Zeichnung an einem Ausführungsbeispiel noch näher erläutert.

In der Zeichnung zeigt:
- Fig. 1: einen an einem Maschinengehäuse befestigten metalischen Körper in Form eines Sensors oder Sensoradapters in Seitenansicht sowie teilweise im Schnitt,
- Fig. 2: den Querschnitt durch die Klebverbindung zwischen dem metallischen Körper und dem Maschinegehäuse im Schnitt entlang der Schnittlinie II-II in Fig. 1,
- Fig. 3: die Draufsicht auf die zum Ankleben des metallischen Körpers an das Maschinengehäuse vorgesehene Klebefläche an diesem, und
- Fig. 4: den bei der Klebverbindung nach Fig. 1 zusätzlich vorgesehenen gewindefurchenden Stift im Querschnitt in bezüglich Fig. 1 vergrößertem Maßstab.

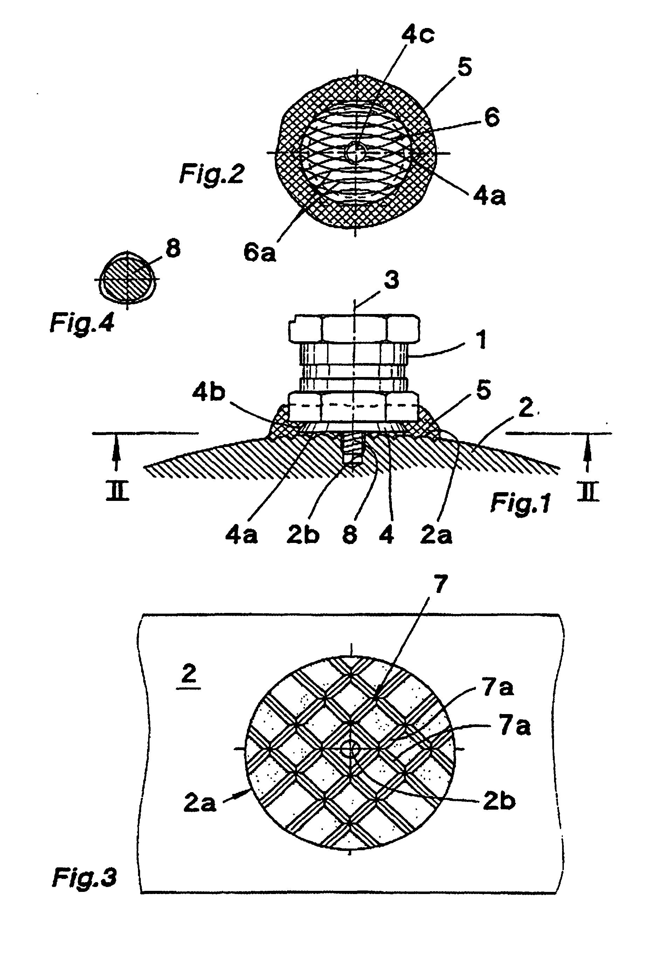

Die Fig. 1 zeigt einen metallischen Körper 1 im an ein Maschinengehäuse 2 angeklebten Zustand in Seitenansicht, wobei das Maschinengehäuse 2 im Schnitt entlang einer die Mittelachse 3 des zu dieser symmetrischen Körpers 1 enthaltenden Schnittebene dargestellt ist. Auch der Klebstoff 5 ist im Schnitt entlang dieser Schnittebene zu sehen.

Von dem Maschinengehäuse 2 ist in der Zeichnung nur der sich in unmittelbarer Nähe des Körpers 1 befindende Teil dargestellt. Bei der Maschine kann es sich beispielsweise um einen Motor, einen Generator oder dgl. handeln, deren Vibration z.B. zwecks Überwachung des Verschleißzustandes der Rotor-Wälzlager gemessen wird, wofür sich im metallischen Körper 1 ein mit diesem in Kontakt stehender Beschleunigungsaufnehmer befindet oder der Körper 1 als Adapter zum Aufnehmen eines Sensors mit Beschleunigungsaufnehmer ausgeführt ist, an dem der Sensor leicht lösbar befestigt werden kann.

Der metallische Körper 1 weist auf der dem Maschinengehäuse 2 zugewendeten Stirnseite einen scheibenförmigen Ansatz 4 auf, der mit ihm aus einem Stück besteht und dessen dem Maschinengehäuse 2 zugewendete Stirnfläche eine Klebefläche 4a zum Ankleben des Körpers 1 an einer Gegenklebfläche 2a des Maschinengehäuses 2 bildet.

Der scheibenförmige Ansatz 4 ist so gestaltet, daß sich an die Klebefläche 4a körpereinwärts eine Hinterschneidung 4b anschließt, die mit dem Umfang der Klebefläche 4a eine scharfe, keilförmige Kante bildet, so daß der Ansatz die Form eines umgekehrten Kegekstumpfes erhält. Durch diese Gestaltung wird erreicht, daß beim Annähern der Klebeflächen 4a und 2a bei gleichzeitiger Drehung des Körpers 1 um die Mittelachse 3 ein in größerer Menge, als zum Bedecken der Klebeflächen 2a und 4a nötig, auf die Klebefläche 2a aufgetragener Klebstoff 5 zuverlässig in die Hinterschneidung hineingezogen wird und sich nach dem Aushärten krallenartig am Umfang des scheibenartigen Ansatzes 4 in der Hinterschneidung festsetzt: Dadurch wird eine besonders feste und vibrationsbeständige dauerhafte Verbindung zwischen dem metallischen Körper 1 und dem Maschinengehäuse 2 erreicht, sobald der Klebstoff ausgehärtet ist.

Zur Begünstigung der Haftung des Klebstoffes 5 an der Klebefläche 4a des Körpers 1 ist in diese, wie in Fig. 2 zu sehen, eine Rillenschar 6 eingeformt, deren Rillen 6a bogenförmig, im Ausführungsbeispiel kreisbogenförmig, gekrümmt sind und einander kreuzen.

Zur Begünstigung des Haftens des Klebstoffes 5 an der Gegenklebefläche 2a am Maschinengehäuse ist auch diese mit einer Rillenschar 7 versehen, deren Rillen 7a einander karoartig kreuzen. Im Ausführungsbeispiel sind diese Rillen gerade, können aber auch, wie die Rillen 6a in der Klebefläche 4a, kreisbogenförmig gekrümmt sein.

Auch die Gegenklebefläche 2a am Maschinengehäuse 2 ist wie die Klebefläche 4a am Körper 1 vorzugsweise im wesentlichen eben.

Da es in der Regel einige Zeit dauert, bevor der zwischen die Klebeflächen 2a und 4a eingebrachte und nach der Annäherung dieser Klebeflächen in die Hinterschneidung 4b eingedrungene Klebstoff fest geworden ist, empfiehlt es sich, die Lage des Körpers 1 bezüglich des Maschinengehäuses 2 noch gesondert zu stabilisieren. Hierfür ist ein mit einem gewindefurchenden Außengewinde versehener, im Querschnitt polygonförmiger (sh. Fig. 4) Stift 8 vorgesehen, der sowohl in eine zentrale Öffnung in der Klebefläche 4a als auch in eine zentrale Öffnung in der Klebefläche 2a am Maschinengehäuse 2 einschraubbar ist, wobei sein Gewinde in die Wandungen der sich senkrecht zu diesen Klebeflächen erstreckenden Bohrungen 6b bzw. 4c eindringt.

Die primäre Aufgabe dieses gewindefurchenden Stiftes 8 besteht nicht darin, die Befestigung des Körpers 1 am Maschinengehäuse 2 zu bewirken, sondern darin, den Körper 1 gegenüber dem Maschinengehäuse 2 in seiner vorgesehenen Endlage zu sichern, solange der Klebstoff nocht weich ist. Natürlich verstärkt der Stift auch die Festigkeit der Verbindung nach dem Aushärten des Klebstoffes 5 in einem gewissen Maße, doch ist die Klebverbindung insgesamt so ausgelegt, daß sie auch ohne diesen gewindefurchenden Stift 8 nach dem Aushärten des Klebstoffes 5 die auf Dauer nötige Festigkeit besitzt.

In den Fig. 2 und 3 ist der gewindefurchende Stift 8 nicht eingezeichnet. Er wird, wenn das Maschinengehäuse 2 mit einer entsprechenden Bohrung 2b versehen werden darf, sowohl in die Bohrung 4c im Körper 1 als auch in die Bohrung 2b im Maschinengehäuse 2 eingeschraubt, doch ist die Klebverbindung zwischen dem Körper 1 und dem Maschinenghäuse 2 auch ohne Verwendung des gewindefurchenden Stiftes 8 herstellbar, wenn eine Bohrung 2b im Maschinengehäuse 2 nicht erlaubt ist.

Als Klebstoff 5 wird vorzugsweise ein Metallkleber aus einer Kunststoffgrundmasse und einer Metallpulverfüllung (z.B. Plastikstahl) verwendet, wodurch nicht nur die gewünschte hochfeste mechanische Verbindung zwischen dem Körper 1 und dem Maschinengehäuse 2 erhalten wird, sondern auch eine weitestgehend ungedämpfte und unverzerrte Übertragung der physikalischen Größe, im Ausführungsbeispiel der Vibration, auf den Sensor, weil ein solcher Kleber aufgrund der Metallpulverfüllung auch in dieser Beziehung sehr gute Eigenschaften hat.

## Patentansprüche

1. Metallischer Körper (1) zum Ankleben von außen an das Gehäuse (2) einer Maschine, insbesondere einer vibrierenden Maschine, wobei es sich bei dem Körper um das Gehäuse eines Sensors zum Umwandeln einer physikalischen Größe, insbesondere Vibration, in ein entsprechendes elektrisches Signal oder einen Adapter zum lösbaren Anbringen eines solchen Sensors an dem Adapter handelt, wobei der Adapter nicht zum Vorspannen von piezoelektrischen Sensorkomponenten, falls vorhanden, dient und wobei der Körper (1) eine im wesentlichen ebene Klebefläche (4a) aufweist, **dadurch gekennzeichnet, daß** sich an die Klebefläche (4a) ein sich verjüngender Bereich (4b) des Körpers (1) anschließt, der mit dem Umfang der Klebefläche (4a) eine scharfe, keilförmige Kante bildet.

2. Körper nach Anspruch 1, **dadurch gekennzeichnet, daß** aus der Klebeßäche (4a) des Körpers (1) mindestens in der Nähe von deren Mitte senkrecht ein Stift (8) vorragt, der in eine Bohrung (2b) einfügbar ist, die sich von einer Klebegegenfläche (2a) am Maschinengehäuse (2) mindestens in der Nähe von deren Mitte senkrecht in das Maschinengehäuse (1) hinein erstreckt, und der mit einem Außengewinde zum gewindefurchenden Einringen in die Wandung dieser Bohrung (2b) versehen ist.

3. Körper nach Anspruch 1 oder 2, **gekennzeichnet durch** eine mindestens in der Nähe der Mitte der Klebefläche (4a) des Körpers (1) befindliche Bohrung (4c), die sich senkrecht in den Körper (1) erstreckt.

4. Körper nach Anspruch 2 und 3, **dadurch gekennzeichnet, daß** der Stift (8) lösbar in die Bohrung (4c) in der Klebefläche (4a) des Körpers (1) eingefügt ist.

5. Körper nach einem der Ansprüche 2 bis 4, **dadurch gekennzeichnet, daß** der gewindefurchende Stift (8) im Querschnitt Polygonform hat

6. Körper nach einem der vorhergehenden Ansprüche, **dadurch gekennzeichnet, daß** in die Klebefläche (4a) am Körper (1) eine den Halt des Klebstoffes (5) an ihr fördernde Rillenschar (6) eingeformt ist

7. Körper nach Anspruch 6, **dadurch gekennzeichnet, daß** die Rillen (6a) der Rillenschar (6) in der Klebefläche (4a) am Körper (1) einander bogenförmig kreuzen.

8. Körper nach Anspruch 6 oder 7, **dadurch gekennzeichnet, daß** die Rillen (6a) der Rillenschar (6) in der Klebefläche (4a) am Körper (1) kreisbogenförmig gekrümmt sind.

9. Verfahren zum Ausbilden einer Klebeverbindung zwischen einer Klebefläche (4a) eines Körpers (1) nach einem der vorhergehenden Ansprüche und einer entsprechenden Klebegegenfläche (2a) außen an einem Maschinengehäuse (2), **gekennzeichnet durch** die Verwendung des Klebstoffes (5) für die Klebverbindung in solcher Menge, daß der Klebstoff (5) bei drehender Annäherung der Klebefläche (4a) des Körpers (1) und der Klebegegenfläche (2a) am Maschinengehäuse (2) **durch** die Drehbewegung in den hinter der Klebefläche (4a) des Körpers (1) befindlichen sich verjüngenden Bereich (4b) hineingezogen wird.

10. Verfahren nach Anspruch 9, **dadurch gekennzeichnet, daß** die Klebegegenfläche (2a) am Maschinengehäuse (2) eben ist und in sie eine den Halt des Klebstoffes (5) an ihr fördernde Rillenschar (7) eingeformt ist.

11. Verfahren nach Anspruch 10, **dadurch gekennzeichnet, daß** die Rillen (7a) der Rillenschar (7) in der Klebegegenfläche (2a) einander karoartig kreuzen.

12. Verfahren nach Anspruch 11, **dadurch gekennzeichnet, daß** die Rillen (7a) der Rillenschar (7) in der Klebegegenfläche (2a) kreisbogenförmig gekrümmt sind

13. Verfahren nach einem der Ansprüche 9 bis 12, **gekennzeichnet durch** die Verwendung eines Metallklebers aus einer Kunststoffgrundmasse und einer Metallpulverfüllung als Klebstoff (5) für die Klebverbindung und als Masse für die Übertragung einer physikalischen Größe von dem Maschinengehäuse (2) auf den Körper (1).

## Claims

1. Metallic body (1) to be adhesively bonded to the outside of the housing (2) of a machine, in particular a vibrating machine, the body being the housing of a sensor for converting a physical variable, in particular vibration, into a corresponding electrical signal or an adapter for releasably attaching such a sensor to the adapter, the adapter not serving for prestressing piezoelectric sensor components, if present, and the body (1) having a substantially planar adhering surface (4a), **characterized in that** the adhering surface (4a) is adjoined by a tapering region (4b) of the body (1), which forms an acute, wedge-shaped edge with the periphery of the adhering surface (4a).

2. Body according to Claim 1, **characterized in that**, from the adhering surface (4a) of the body (1), at least near its centre, there protrudes perpendicularly a stud (8) which can be inserted into a drilled hole (2b) which extends from an adhering mating surface (2a) on the machine housing (2), at least near its centre, perpendicularly into the machine housing (1) and which is provided with an external thread for thread-cutting penetration into the wall of this drilled hole (2b).

3. Body according to Claim 1 or 2, **characterized by** a drilled hole (4c) which is located at least near the centre of the adhering surface (4a) of the body (1) and extends perpendicularly into the body (1).

4. Body according to Claims 2 and 3, **characterized in that** the stud (8) is releasably inserted into the drilled hole (4c) in the adhering surface (4a) of the body (1).

5. Body according to one of Claims 2 to 4, **characterized in that** the thread-cutting stud (8) has a polygonal shape in cross section.

6. Body according to one of the preceding claims, **characterized in that** a group of grooves (6) promoting the retention of the adhesive (5) on the adhering surface (4a) on the body (1) is formed into the said surface.

7. Body according to Claim 6, **characterized in that** the grooves (6a) of the group of grooves (6) in the adhering surface (4a) on the body (1) cross one another in an arcuate manner.

8. Body according to Claim 6 or 7, **characterized in that** the grooves (6a) of the group of grooves (6) in the adhering surface (4a) on the body (1) are curved in a circular-arcuate manner.

9. Method of forming an adhesive bond between an adhering surface (4a) of a body (1) according to one of the preceding claims and a corresponding adhering mating surface (2a) externally on a machine housing (2), **characterized by** use of the adhesive (5) for the adhesive bond in such an amount that, as the adhering surface (4a) of the body (1) and the adhering mating surface (2a) on the machine housing (2) are rotationally brought together, the adhesive (5) is drawn into the tapering region (4b) located behind the adhering surface (4a) of the body (1) by the rotational movement.

10. Method according to Claim 9, **characterized in that** the adhering mating surface (2a) on the machine housing (2) is planar and a group of grooves (7) promoting the retention of the adhesive (5) on it is formed into the said surface.

11. Method according to Claim 10, **characterized in that** the grooves (7a) of the group of grooves (7) in the adhering mating surface (2a) cross one another in a chequered manner.

12. Method according to Claim 11, **characterized in that** the grooves (7a) of the group of grooves (7) in the adhering mating surface (2a) are curved in a circular-arcuate manner.

13. Method according to one of Claims 9 to 12, **characterized by** the use of a metal adhesive comprising a basic polymer composition and a metal powder filler as the adhesive (5) for the adhesive joint and as a mass for the transmission of a physical variable from the machine housing (2) to the body (1).

## Revendications

1. Corps métallique (1) à coller par l'extérieur sur le bâti (2) d'une machine, en particulier d'une machine vibrante, dans lequel il s'agit, pour le corps, du boîtier d'un capteur destiné à convertir une grandeur physique, en particulier une vibration, en un signal électrique correspondant ou d'un adaptateur pour appliquer de façon séparable un tel capteur à l'adaptateur, dans lequel l'adaptateur ne sert pas pour la précontrainte de composants piézo-électriques du capteur s'ils sont présents, et dans lequel le corps (1) présente une face de collage sensiblement plane (4a), **caractérisé en ce qu'**une région se rétrécissant (4b) du corps (1), qui forme une arête vive en forme de coin avec le périmètre de la face de collage (4a), se raccorde à la face de collage (4a).

2. Corps suivant la revendication 1, **caractérisé en ce que** de la face de collage (4a) du corps (1) sort perpendiculairement, au moins à proximité du centre de cette face, une tige (8) qui peut être introduite dans un alésage (2b), qui s'étend perpendiculairement dans le bâti de machine (2), à partir d'une face de collage opposée (2a) sur le bâti de machine (2) au moins à proximité du centre de celle-ci, et qui est pourvue d'un filet extérieur pour pénétrer dans la paroi de cet alésage (2b) en creusant un filet.

3. Corps suivant la revendication 1 ou 2, **caractérisé par** un alésage (4c) se trouvant au moins à proximité du centre de la face de collage (4a) du corps (1), et qui s'étend perpendiculairement dans le corps (1).

4. Corps suivant la revendication 2 et 3, **caractérisé en ce que** la tige (8) est introduite de façon séparable dans l'alésage (4c) dans la face de collage (4a) du corps (1).

5. Corps suivant l'une quelconque des revendications 2 à 4, **caractérisé en ce que** la tige auto-taraudeuse (8) présente une section transversale de forme polygonale.

6. Corps suivant l'une quelconque des revendications précédentes, **caractérisé en ce qu'**un réseau de stries (6) favorisant la retenue de la colle (5) sur la face de collage (4a) est façonné dans la face de collage (4a) sur le corps (1).

7. Corps suivant la revendication 6, **caractérisé en ce que** les stries (6a) du réseau de stries (6) dans la face de collage (4a) sur le corps (1) se croisent l'une l'autre en forme d'arc.

8. Corps suivant la revendication 6 ou 7, **caractérisé en ce que** les stries (6a) du réseau de stries (6) dans la face de collage (4a) sur le corps (1) sont incurvées en arc de cercle.

9. Procédé pour réaliser un assemblage collé entre une face de collage (4a) d'un corps (1) suivant l'une quelconque des revendications précédentes et une face de collage opposée correspondante (2a) extérieurement sur un bâti de machine (2), **caractérisé par** l'utilisation de la colle (5) pour l'assemblage collé en une quantité telle que, lors de l'approche tournante de la face de collage (4a) du corps (1) et de la face de collage opposée (2a) sur le bâti de machine (2), la colle (5) soit attirée par le mouvement de rotation dans la région se rétrécissant (4b) se trouvant derrière la face de collage (4a) du corps (1).

10. Procédé suivant la revendication 9, **caractérisé en ce que** la face de collage opposée (2a) sur le bâti de machine (2) est plane et un réseau de stries (7) favorisant la retenue de la colle (5) sur cette face est formée dans celle-ci.

11. Procédé suivant la revendication 10, **caractérisé en ce que** les stries (7a) du réseau de stries (7) se croisent l'une l'autre en forme de carreaux dans la face de collage opposée (2a).

12. Procédé suivant la revendication 11, **caractérisé en ce que** les stries (7a) du réseau de stries (7) dans la face de collage opposée (2a) se croisent en forme d'arc de cercle.

13. Procédé suivant l'une quelconque des revendications 9 à 12, **caractérisé par** l'utilisation d'une colle métallique composée d'une masse de base synthétique et d'une charge de poudre métallique comme colle (5) pour l'assemblage collé et comme masse pour la transmission d'une grandeur physique du bâti de machine (2) au corps (1).
